# EUROPEAN PATENT APPLICATION

(11) **EP 0 758 190 A1**
(43) Date of publication of application: **12.02.1997**
(21) Application number: 95480102.3
(22) Date of filing: 08.08.1995
(51) Int. Cl.: H04Q 11/04

(54) **Method and apparatus for communication of ATM cells in a ring network**

(71) Applicant: International Business Machines Corporation, Armonk, N.Y. 10504 (US)
(72) Inventor: Michel, Patrick, F-06610 La Gaude (FR); Lepennec, Jean-François, F-06100 Nice (FR); Picon, Joaquin, F-06700 Saint Laurent du Var (FR); Benayoun, Alain, F-06800 Gagnes Sur Mer (FR)
(74) Representative: Schuffenecker, Thierry

(57) **Abstract**

A method and apparatus for allowing communications of Asynchronous Transfer Mode (ATM) cells in a ring network is disclosed. The ring comprises at least one station A (101), a second station B (102) and a third station (001) which operates as a ring server. The communication within the ring is based on a specific frame structure having two delimiters, a frame starting and a frame ending delimiters. The frame further comprises a TOKEN field used by each station for requesting an access to the next frame which will be available in the ring. The TOKEN includes a first PRIORITY field which is continuously updated by each station when the frame circulates with the ring. This is performed by the replacement of value carried by the PRIORITY field by the own PRIORITY value of the station when the latter appears to be superior than the former. Additionally, the frame has an ACCESS field including a first LEVEL field which is used by each station, in response to a comparison with the value carried by said priority field of said ACCESS field and the internal priority of the ATM cell which station wishes to transmit, for accessing the frame. The frame is then completed with an TM cell for allowing the transport of control or data via the communicating ring.

## Description

### Technical field of the invention

The invention relates to telecommunications and particularly to a method and apparatus for transporting cells of data having fixed or variable lengths, such as ATM cells, in a ring network.

### Background art

Most Local Area Networks (LAN) in use today are shared media LANs, Carrier Sense Multiple Access with Collision Detection (CSMA/CD) used on the Ethernet (802.3) bus or token-passing used on the token-ring LAN or Fiber Distributed Data Interface (FDDI). In some cases, there is a need for more bandwidth and facility to transport video, voice and data . Asynchronous Transfer Mode (ATM) is one of the technology designed to transport these various traffics through the LAN and through the WAN . ATM is an emerging technology for cell relay and defines a fixed length 53-byte packet or cell which consists of a five-byte header and 48 bytes of user information or payload as defined by CCITT (now called ITU-T).

The five-byte header is in Network node interface (NNI) defined with a first field of 12 bits called Virtual Path Identifier (VPI), a second field of 16 bits called Virtual Channel Identifier (VCI) : together these two fields identify the connection , the function is similar to the Logical Channel Identifier (LCI) in X.25 or the Data Link Control Identifier (DLCI) of frame relay.

### Additional fields are

The Payload Type (PT) , the Cell Loss Priority (CLP), and the Header Error Check (HEC) for the remaining part of the Header. VPI and VCI will also be called herafter in the document respectively as VP and VC.

The current way to interconnect ATM native equipments in the campus is to use LAN switches as defined by the ATM Forum (non-profit consortium of companies and organizations interested in ATM development) and ITU-T.

The main advantage of switch connection is that all devices can send simultaneously at full media speed in comparison with classical LAN connection where only one device can send at any one time. The disadvantage is a higher cost by port.

More details may be found in general documentation relating to ATM, and particularly IBM red book GG24-4330 : ATM , Technical Overview.

Numerous topologies are used for local area networks . The basic networks topologies are : Mesh topology , Star topology , Bus and tree topology and Ring topology . In a Network that has a ring topology , each station is attached to its adjacent station by point-to-point links, thus forming a physical ring. Each station's adapter regenerates the signal as it retransmits a data packet that is circulating on the ring.

A popular protocol used with the ring topology is token-passing, in which access to the medium is controlled by possession of a circulating token. Only one token may exist on a ring segment at any given point in time. The token is a specific bit sequence (24 bits) circulating around the ring.

In addition when a ring station transfers data to the ring , it should upon return of the frame remove the data from the ring. In order to establish communication between any two ring stations, addressing mechanism are needed. All ring stations are identified by a unique individual address (assigned by IEEE organization) called MAC address 16 bits or 48 bits long . Its a connection less mechanism as each station is unique in the network and can be located thanks to broadcast mechanism. This network is limited in term of throughput and delay but not very expensive.

The ATM LAN also called Local ATM uses a star topology . Each station is connected to a central controlling point (also called a switch). Its a connection oriented mechanism where the sending station must send a connection request to the central switch. The switch will then set up the connection. Once the connection is established, the two stations can transfer information. The star network is very simple and very efficient but has two main problems : cost and reliability because the switch is a single point of failure.

Further details are provided in IBM red books GG24-3178 : Local Area Network , Concepts and Products.

### Summary of the invention

It would be desired to extend the possibility of connection of different ATM equipments by using some kind ring topology rather than the above mentioned star topology.

The problem to be solved by the present invention is to avoid the use of a star switching node to provide inter-connectivity of ATM equipments. This problem is solved by the use of a ring topology . The physical topology remains a shared media while the logical structure is connection oriented . The object of this invention is to provide a very efficient shared media network , using a ring topology , able to transport ATM cells with a better throughput than current token-passing protocols taking the advantages of both token-ring and ATM technologies to provide efficient ATM access at low cost.

Basically the ring allows the communication of Asynchronous Transfer Mode (ATM) cells. The ring comprises at least one station A (101), a second station B (102) and a third station (001) which operates as a ring server. The communication within the ring is based on a specific frame structure having two delimiters, a frame starting and a frame ending delimiters.

The frame further comprises a TOKEN field used by each station for requesting an access to the next frame which will be available in the ring. The TOKEN includes a first PRIORITY field which is continuously updated by each station when the frame circulates with the ring. This is performed by the replacement of value carried by the PRIORITY field by the own PRIORITY value of the station when the latter appears to be superior than the former.

Additionally, the frame has an ACCESS field including a first LEVEL field which is used by each station, in response to a comparison with the value carried by said priority field of said ACCESS field and the internal priority of the ATM cell which station wishes to transmit, for accessing the frame.

The frame then comprises an ATM cell for transporting control or data via the communication ring.

Each station which wishses to access the frame which circulates within the ring performs the steps of:
- detecting reception of said frame;
- upon reception of a frame, performing a comparison between the LEVEL value and its own priority value assigned to the ATM cell which is to be transmitted and,
- in response to said comparison, updating the contents of said LEVEL field with the highest priority value in order to get access to the frame;
- transmits the frame to the ring with its own ATM cell.

The station which has to process this ATM cell receives it and can then release the frame by clearing the ACCESS field. The release is completed when the next station, upon detection of the clearance of the ACCESS field, causes the contents of the PRIORITY field of the TOKEN to move into the LEVEL field. If the frame happens not to be processed by a station within the ring, the latter comes back to the transmitting station which is then made aware of this abnormal condition. The latter can then clear the ACCESS field so that to release the frame. The ring station also checks the circulation of the frame in order to prevent the same frame to perform more than a turn within the ring.

### Description of the drawings

Figure 1 is a overall view of the ring topology according to the present invention.

Figure 2a and 2b illustrate the structure of the hardware adapter in the preferred embodiment of the invention.

Figure 3 is a diagram illustrating the operating of the state machine which controls both the reception and transmission of the data received and/or transmitted. Router 200 is a particular station which provides the connectivity to external devices such as remote native ATM stations etc...

Figure 4 illustrates the signalisation and procedures involved in the communication between both stations A and B under control of server in the ring topology.

Figure 5 is a flow chart of the protocol allowing the control of the station in the ring topology.

Figure 6 is a flow chart of the protocol allowing the control of the server in the ring topology.

### Description of the preferred embodiment of the invention.

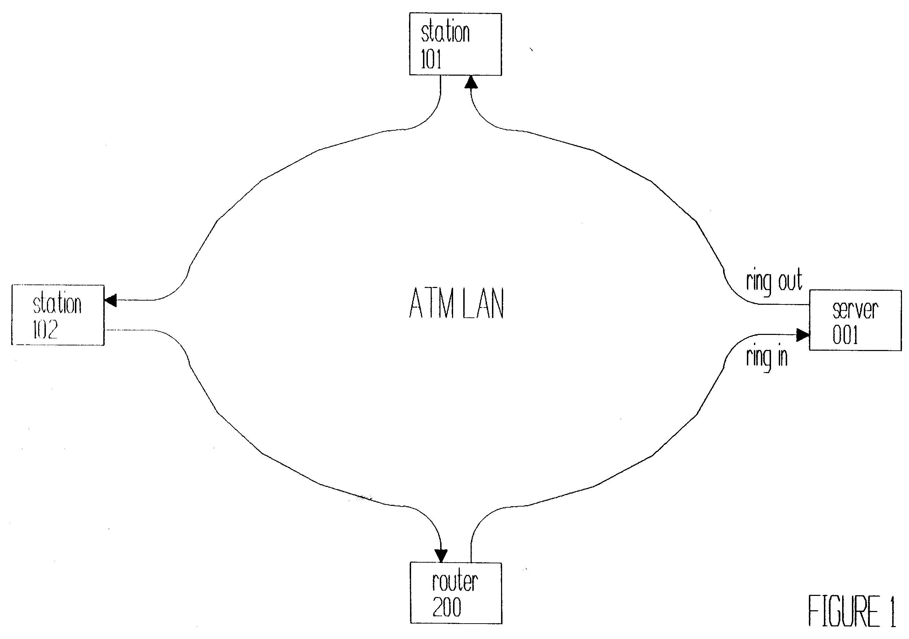

With respect to figure 1 there is shown a ring topology which, for instance, comprises two stations 101 and 102, one ring server 001 and a router 200. Server 001 provides the control of the ring, including integrity control and failure management. It particularly adapts the length of the frame which may include one or several ATM cells depending on the number of the users and affects the different Virtual Paths (Vp) and Virtual Circuits (Vc) for each communication between two stations in the ring.

In the preferred embodiment of the invention, the communication between the stations, the server and optionally the router is based on the following frame structure which comprises at least one ATM cell: 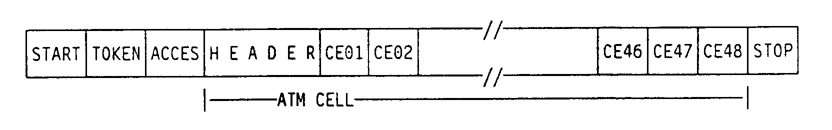 where START and STOP fields are frame delimiters. In one embodiment, the START pattern may be for instance the 'JK' violation of the 4B/5B of the F.D.D.I. start delimiter.

ACCESS and TOKEN are fields which are used for managing the priority in accordance with the present invention and allow the use of the ATM cell. These different fields will be described hereinafter with greater details.
- The token byte will be |PRIORITY|T|
- The access byte will be |LEVEL |B|

The remaining part of the frame ( Header, CE01 .... CE048) comprises the traditional ATM cell including the header and the payload.

The token is very specific and has several functions . First , it allows to request an access to an ATM CELL but the request is for the next ATM CELL , not for the current one . This allows multiple requests to append and to be discussed among several users . The token byte is divided in two fields , one is the Type field (T) one bit used to make a difference between normal ATM frames and control or special frames. It is set at a logical value 0 for normal ATM data frames , and at a logical value 1 in other cases. The second one is the priority value of the request (7 bits) .

The access byte is divided in two fields : the level field (7 bits) contains the highest priority field of the previous frame if the current cell is free . As soon as an adapter finds that this field is equal or less than its own priority , it takes the cell and set this level field to 1111111B to avoid other adapter to take this frame. The Broadcast bit (B) indicates whether the frame is a normal data transfer between two adapters or a broadcast frame. the difference for the other adapters on the ring is that they should not discard this broadcast frame even if they find that they have to receive it. Only the originator of a broadcast frame is able to suppress it , and the ring server of course for error management.

When the cell is received , the receiver station plus the station following this station acts as a server called virtual server . To be clear let's define the receiver station as server1 and the next station server2. The server1 receives the cell when it detects the correct header field in the ATM cell. It has also to clear the ACCESS byte at the same time. The server2 detects that the ACCESS byte is cleared. The server2 moves the priority field content of the TOKEN BYTE to the level field of the ACCESS byte . A new cell is available and the first device that see that the level field is exactly the priority or below can take it to transmit a cell. The main advantage of this mechanism is that several transactions are possible during the same turn of the frame . Another advantage is that the available frame starts each time from a new point allowing a kind of rotating priority within a same level of priority avoiding the same device to use all the frames .

When a station sends a cell , the acknowledge that the frame is received (good or bad) is deducted from the fact that a new frame is present on the ring : If the frame is not received , it would have made a full turn and would have been detected by the transmitter. Each device is looking at the address field of the ATM cell to check if the cell is to be kept or not. The ring controller or ring server will accept only one appearance of such information. That means that if in an full turn , nobody has taken the cell , the cell is destroyed , the ring server will see who is the failing device by looking at the address field of the ATM cell and will take appropriate network management actions . Another main function of the ring controller is to maintain the length of the ring depending on the number of devices it supports to stay as close as an entire number of cells to optimize the thruput. Depending on the number of devices on the ring, and because of about three bytes delay of each station, the number of cells simultaneously running on the ring may change from 1 to N:
- one frame with up to 20 devices
- two frames with up to 40 devices
- three frames with up to 60 devices

In that case , each frame works independently as if there were N rings.

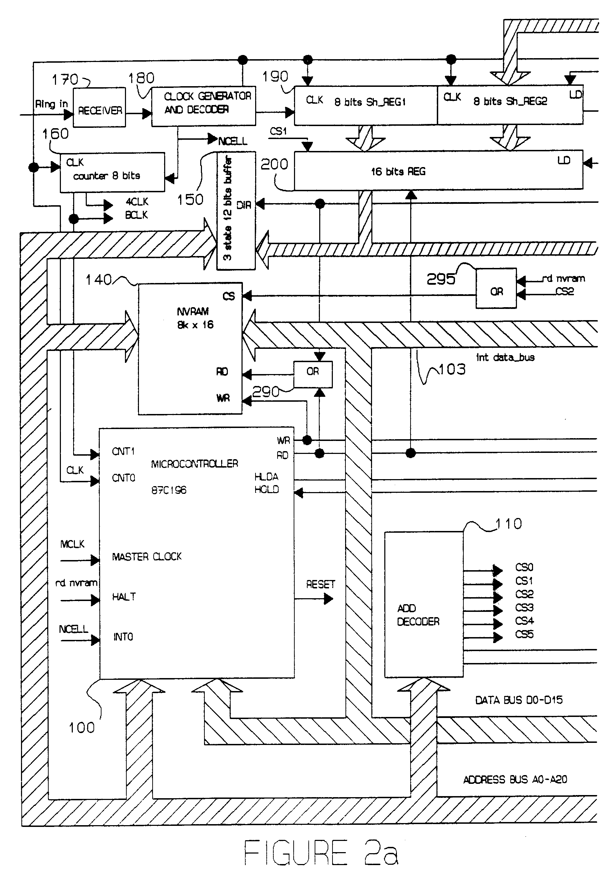

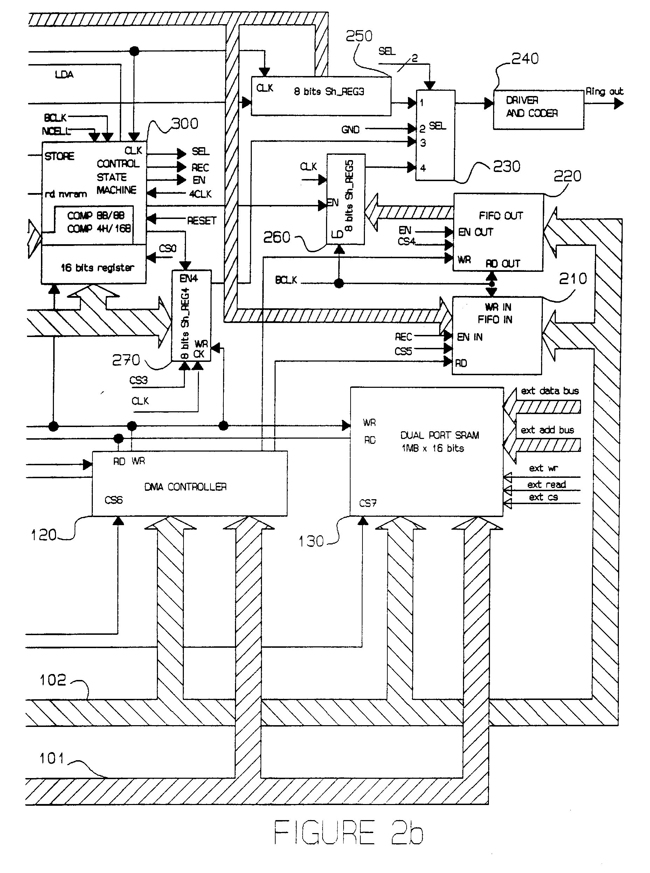

Each of the preceding elements is connected to the ring by means of a specific adapter interface which is illustrated in figure 2 and which allows the embodiment of the protocol of the invention.

The interface adapter comprises a microcontroller 100 which may use, for instance, an INTEL 87C196 microcontroller. The latter communicates via an A0-A20 address bus 101 to an Address Decoder 110 for providing the different chip_select signals that are needed in the different elements of the adapter, a Direct Memory Access (DMA) controller 120, a RAM storage 130 which may be a DUAL PORT Static Read Access memory, a NVRAM 140 and a tri-state 12-bits buffer 150. Microcontroller 100 is also connected via a D0-D15 data bus 102 to Address Decoder 110, DMA controller 120, DUAL PORT Static RAM 130, NVRAM 140, a FIFO_In buffer 210, a FIFO_Out buffer 220, a 8-bit Sh_REG4 buffer 270 and to a 16-bit register which is included into a Control circuit 300. As will be described hereinafter with details, the latter 16-bit register is used for managing the token and access priority by the processor 100.

The LAN Adapter receives the frames from the ring at a Ring_in input lead of a receiver block 170 which provides the decoding of the delimiters of the frame. The frame is then transmitted to a clock generator and decoder circuit 180 which extracts a New_Cell (NCELL) synchronization signal as well as an appropriate clock signal in accordance with the standard and protocol being used, for instance the Manchester coding or 4B/5B coding etc... The digital data being decoded and extracted from block 180 is then transmitted to the serial input of a set 190 comprising two 8-bits registers Sh_Reg1 and Sh_Reg2, the latter receiving the serial data from the former. The serial output of the Sh_Reg2 register of block 190 is connected to the serial input of a 8-bits Sh_Reg3 register 250 which has an output which is connected to a first input lead of a selector 230. Selector 230 has an output which is connected to a coder and driver circuit 240 which allows the connection to the Ring_out output lead. Selector 230 is controlled by means of a 2_bit SEL control bus connected to Control State Machine 300. Coder and driver circuit 240 provide the physical and logical coding in accordance with the standard being chosen, e.g. the Manchester or 4B/5B. These well known operations are not part of this invention and will not be described with further details.

The LAN adapter further comprises additional circuitry, particularly a 8_bit shift register 260, a 16_bit register 200 and a set of two OR gates 290 and 295 which will be described with reference to the functional description below.

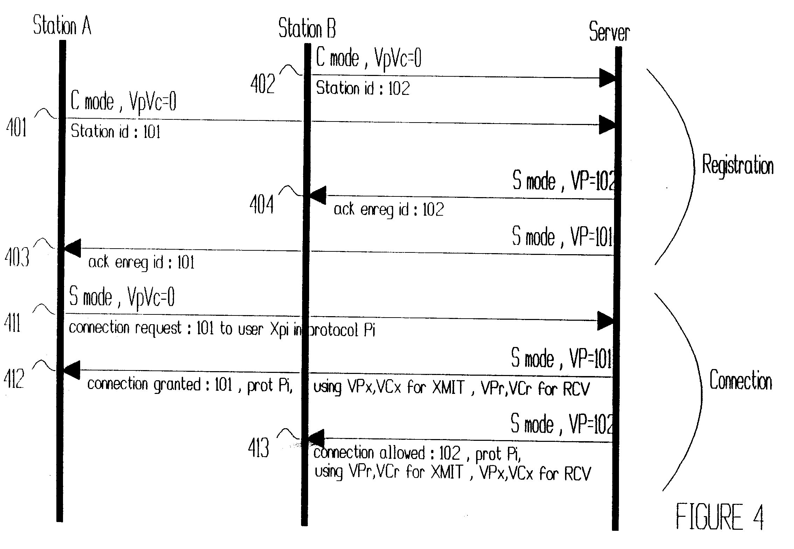

The functional operations of the LAN adapter will now be described with details with reference to the flowchart illustrated in figure 4. For clarity's sake the flow of operations are illustrated in this figure under the form of a state machine diagram.

The machine is initialized after the power-on or a reset of the machine during state I0. To achieve this, an Enable (EN) control signal is first generated and transmitted to 8-bit shift register 260 and FIFO_OUT circuit 220. Control state machine 300 also generates a first value '1' among the four values which can be transmitted by two bit SEL bus. This value results in Selector 230 being set to select the data provided by 8-bit shift register 250. This initialization procedure results in the machine being set in a transparent mode, that is to say the frames which are received in receiver 170 are transmitted to driver 240 via the succession of circuits 180, 190, 250 and 230. In addition , an internal broadcast (B) register in control state machine 300 is set to default value 0 (characterizing the no broadcast mode).

Then the initialization process proceeds with step I1 . Upon detection of byte clock (BCLK) signal produced by counter 160 which receives the input frame as well as the clock extracted from clock generator and decoder 180, the previously Enable lead (EN) set to 1 on step I0 is reset to its default value 0. In this way, the 8-bit shift register Sh_reg5 260 is loaded with the first byte of the frame corresponding to the ACCESS field content which value will be either FFH or FEH . The remaining part of the frame being still ready into the FIFO_OUT register 220 , pre-loaded by microcontroller 100 and DMA controller 130.

At last, the initialization procedure completes with the setting of the 16-bit register into state control machine 300 to the lowest priority and access value. However, it should be noticed that the processor 100 will, at any time, be able to change and update the contents of this 16-bit register (for the purpose of requesting a token in order to transmit data).

When the initialization procedure completes, the process proceeds to state 01 of figure 4. As long as receiver 170 does not detect any new cell, that is has not yet decoded the existence of a START field in the data flow, the process remains in state 01. On the contrary, when a new cell is detected (represented in figure 4 by the NEWCELL field being set to YES), state control machine sets internal S and T bit registers to zero. The process then proceeds to state 02. Counter 160 receives the clock signal provided by clock generator 180 and produces a byte clock signal (BCLK) which is transmitted into various locations in the machine, and particularly to microcontroller 100 and state control machine 300. Upon detection of the byte clock that follows the receiving of the START field, state control machine 300 generates an active STORE signal which is transmitted to a LOAD input (LD) of 16 bit register 200. This allows the token which exists in the 8 first locations of the register 190 to be transferred and stored inside 8 bit register 200.

Then, if the adapter is requesting the token in order to transmit data, state control machine 300 detects that internal 16 bits egister 300 is not equal to 0000H and state control machine 300 performs a comparison between the value of the 7 MSB of the token (in the preferred embodiment) and the contents of the 7 corresponding bits which are loaded into 16-bit internal register of circuit 300. If the comparison reveals that the token which was received has a lower priority access than that which was recorded in the 16-bit register, then state control machine sets its internal S register to a logical ONE. The process then proceeds to state 03.

In state 03 the machine monitors the next Byte_clock (BCLK) signal produced by counter 160 which corresponds to the storage of the ACCESS byte into Sh_Reg1 of the register 190. Similarly as above, pon detection of BCLK signal, state control machines generates a oad (LD) control signal to 16-bit register 200 in order to transfer the contents of register 190 into 200. Then, State controlmachine sets Enable (EN) and a Record (REC) control signals to a logical one. The latter REC signal is transmitted to the Enable input lead of FIFO_IN circuit 210. Also, the 2-bit SEL bus is set to carry the value of the first position of selector 230. The contents of the 8 bits of the ACCESS field is then compared either with zero and 'FF'. It the ACCESS field is equal to 'FF', state control machine sets an internal bit B to one (broadcast mode) and proceeds to state 05. If the field is equal to zero, state control machine 300 sets the two bits S and T to a logical one, which corresponds to a reset of the token and a copy of the token to the access field. The process then goes to state 06.

In state 05, state control machine 300 performs a comparison between the 8 last bits of register 200 with the 8 last bits of its 16-bit register. This allows to perform a comparison between the token (that is preceding the access byte in register 200) and the value stored into the 16 bit register. If the two values are found to be identical, state control machine 300 will reset its internal register in order to clear the internal broadcast token. This therefore allows the LAN interface to generate broadcast token which will circulated throughout the ring with the possibility to clear it when the token will complete its transmission through the ring.

If the ACCESS field has a value which is neither equal to zero or 'FF' (that is to say its value is comprised within the range 01 and FE), the process proceeds to state 04. If the Request_Token (RT) internal bit is at a logical one a further comparison is performed. The 7 MSB of the register 200 (corresponding to the ACCESS field) are compared with the corresponding bits of the 16-bit internal register of state control machine 300. If the comparison indicates that the priority of the current frame is lower than the value recorded into its 16-bit register of state control machine 300 - then the internal S and T bits are respectively set to a logical Zero and a logical One. This means that the Cell is free and the priority of the adapter is higher than that of the frame. Therefore, the adapter becomes able to use this frame to transmit its own data.

The process then proceeds to state 06 where the machine monitors the next BCLK byte clock pulse produced by counter 160 which corresponds to the storage of the first address byte (eight first bits of the VP field of the ATM header) into SH_REG1 of register 190. Upon the detection of the BCLK pulse, a set of parallel operations are performed in order to process internal registers S and T.

A first operation consists in the processing of the token field in the ATM frame when required. If its internal registers S and T are respectively set of a logical one and a logical zero, control state machine 300 activates SEL control bus so that selector 230 performs the selection of the third input which is connected to the output of 8 bits SH_REG4 register 270. This situation occurs when the current priority of the token which is received from the ring is lower than the priority that is requested by the particular adapter at this location in the ring. This adapter will replace the priority which circulates on the ring by its own superior priority. To achieve this, control state machine 300 activates EN4 control lead to let the contents of SH_REG4 register 270 be successively transferred to the third input of selector 230 so that it supersedes the token contained into SH_REG3 register 250.

This is achieved by means of microcontroller 100 which controls the transfer of the new token (including the 7_bits PRIORITY field and the additional TYPE bit). The transfer of this new token is practically performed by the generation of the Write, CS3 chip select control signals which are well known in the data processing art. It should be noticed that the pre-loading of register 270 is under control of the microcontroller 100 and can occurs at any time and any state of control state machine 300.

A second operation consists in the processing of the ACCESS field in the ATM frame in the case where the ACCESS byte is equal to zero, what occurs when the previous adapter in the ring has received an ATM frame and has decided to clear the ACCESS field. In this case, the next adapter has to reset the token field and copy the contents of the TOKEN field into the ACCESS field or byte. As mentioned above, when the ACCESS field was detected to be equal to zero in state 03, the S and T bits were both positioned to a logical one. Therefore, in state 06, when the two latter bits are detected to be a logical one, control state machine 300 generates a LDA load control signal to SH_REG2 register 190 as well as a SEL control word to the input of the selector 230 so that the latter selects its second input which is connected to the ground (logical zero). This LDA load control signal results in the copying of the contents SH_REG3 register 250 into SH_REG2 register of circuit 190. Therefore, the token that was stored into the former register is copied and now replaces the empty ACCESS field loaded into the latter register. The process then proceeds to state 07.

In state 07, control state machine 300 monitors the occurrence of the half byte clock pulse of the next clock period. This is achieved by the detection of a 4CLK control pulse that is produced by counter 160 after a period of exactly 4 elementary (CLK) clock pulse after the previous (BCLK) Byte clock pulse. It should be noticed that the occurrence of the 4CLK control pulse coincides with the storage into shift register 190 of the twelve first address bits of the ATM cell (8 bits of AD1 address and 4 additional bits of AD2 in figure 4) that represents the ATM Vp field. At the detection of the 4CLK pulse, control state machine 300 activates a STORE control signal which is transmitted to the LOAD (LD) input of register 200. This results in the transferring of the contents of register 190 into register 200. Also, machine 300 activates a RD_nvram control signal to access the Non Volatile (NVRAM) memory 140. This control signal causes some different actions. Firstly, the latter RD_NVRAM is transmitted to the DIR input lead of 12_bits_tristate bidirectional buffer 150 in order to reverse the direction of buffer 150. Therefore, the output of register 200 (carried on the internal data bus 103) may be used as an address to access NVRAM memory storage 140. Secondly, the RD_NVRAM control signal provided by control state machine 300 is transmitted to a first input of OR gate 290 which output is used for driving the READ input lead of NVRAM storage 150. Similarly, the RD_NVRAM control signal is provided to a first input of OF gate 295 which output is used for controlling the chip_select input of NVRAM storage 150. This causes the latter storage to be selected. The NVRAM then initiates a read operation at the location that is defined by the twelve bits forming the Vp field of the ATM cell. Thirdly, the RD_NVRAM signal is transmitted to microcontroller 100 in order to halt the latter during the READ action of the NVRAM storage 140 by control state machine 300.

Next, state 08, an internal delay process is introduced in order to fit the specific requirements of the NVRAM storage that is used. Indeed, as known in the art, the NVRAMs that are available often require some delay to present the data on their outputs. Depending on the internal characteristics of the particular NVRAM that is used for the embodiment of the invention, and especially if high speeds are involved (e.g. clocks which operate at 100 Mhz or above), it may be necessary to incorporate into the process an internal delay in order to fit the requirements of the NVRAM storage. In the preferred embodiment of the invention, an additional delay of 3 elementary clock pulse is introduced. Therefore, and assuming that the ring operates a 100 Mbps, this 3_clock delay process allows the possibility to use NVRAM that has an access time of about 30 nanoseconds. However, it should be noticed that this additional delay process is not critical since the skilled man will have the possibility to either change the technology of the NVRAM being used, or use a rapid RAM storage that has its own external battery backup. Another possibility to fit the requirements of the NVRAM while allowing very high speed operating is to provide additional latches or registers to increase the length of register 190. Such minor adaptations will be easily performed by the skilled man.

At the end of the 3 time clock period, the data that is extracted from the NVRAM 140 is directly transmitted to the 16 bits internal register of machine 300 via bus 102. State control machine 300 then releases the RD_NVRAM control signal. The process then proceeds to state 09.

In state 09, control state machine 300 monitors the occurrence of the next BCLK Byte clock pulse which corresponds to the storage into SH_REG1 of register 190 of the second byte (AD2) of the ATM address. At this time, the four Least Significant Bits of SH_Reg register 190 corresponds to the four Most Significant Bits of the Vc field of the ATM cell. The contents of the register 190 is then loaded into register 200 by means of the appropriate CS1 chip select and LD load control signals which are generated by machine 300. Then, five distinctive parallel processes are operated in state 09.

A first process is involved in order to determine the value of the bit among the 16 bits of the 16 bit internal register of machine 300, the position of this bit being determined by the value of Vc in hexadecimal notation that is carried by the four LSB of register 200. This process is achieved by means of a 16 input selector that has a 4_bit control bus. The design of such a circuit will be straightforwardly performed by the skilled man. In accordance with the result of this determination, control state machine 300 sets a REC internal latch and correspondingly activates a REC control lead which is transmitted to the Enable_In (EN_IN) input lead of FIFO_IN circuit 210.

A second process is involved which consists in the testing of the two REC and B internal latches. If REC latch is positioned to a logical ONE while the B internal latch is positioned to a logical ZERO, then control state machine 300 generates a SEL control word which entails the positioning of Selector 230 to select its second input. This situation occurs when a frame has to be stored (i.e. REC being equal to ONE) and, additionally, when this frame is not a broadcast one (represented by B equal to ZERO). In this situation, since selector 230 is positioned to its second input, the ACCESS field is cleared.

A third process is also executed, whatever the value of REC internal latch is, which tests the logical states of the S and T internal latches. When the two latter latches are respectively equal to ONE and ZERO, control state machine 300 generates a low level on its EN4 control lead which is transmitted to the Enable input lead of register 270. Also machine 300 produces a SEL control word that controls selector 230 to select the first position of its four input lead. This situation occurs when the priority of the current token was formerly replaced by a new priority in state 06, and the loading of the 16 bit internal register of machine 300 being completed it is now necessary to deactivate EN4 control lead. In this case, the control of selector 230 causes the access field (which is loaded into register 250) to be transferred to the ring.

The fourth process is also executed which, similarly as above, tests the contents of the S and T internal latches. When the two latches are respectively found to be equal to ZERO and ONE, control state machine generates a high on its EN control lead which is transmitted to the Enable input lead of register 260 and FIFO_OUT circuit 220. Also machine 300 produces a SEL control word that controls selector 230 to select the fourth position of its four input lead. This situation occurs when the adapter that is processing the frame starts to transmit its own ATM cell which is preceded by an ACCESS field which is set to 'FF' (in hexadecimal) or 'FE' (in hexadecimal) depending on the fact of the cell being broadcast or not. In this case, SH_REG5 shift register 260 has its Enable input which is activated and therefore allows the transfer of the data from FIFO_OUT 220 to the ring via driver 240. It should be noticed that the FIFO_OUT circuit 220 is under control of microcontroller 100 and DMA controller 120 which allows the data which are stored into RAM storage 130 to be transferred into FIFO_OUT circuit 220. Such basic data transferring is well known in the art and will not be described with further details. Conversely, microcontroller 100 and Direct Memory Access 120 are capable of extracting the contents of FIFO_IN circuit 210 for their storage into RAM storage 130.

At last a fifth process is executed which consists in the testing of the logical states of the S and T internal latches. When the two latter latches are both equal to ONE, control state machine 300 produces a SEL control word that controls selector 230 to select the first position of its four input leads. This situation occurs when the ACCESS was cleared by the preceding adapter in the ring, what situation resulted in state 06 in the selection of the second position of selector 230 (SEL=2). In this case, the selector 230 is repositioned so as to permit the direct transfer of the contents of SH_REG3 register 250 - that is the ACCESS field which was received from the ring - to driver 240.

It should be noticed that machine 300 is provided with an internal circuit that allows priority management, SEL=4 being the highest one while SEL=1 being having the lowest priority. The process then proceeds to state 10.

In state 10, control state machine 300 monitors the occurrence of the next BCLK Byte clock pulse which corresponds to the storage into SH_REG1 of register 190 of the next byte of the ATM header. Upon detection of this BCLK clock pulse, control state machine tests the state of REC, B and S internal latches. If the latter are respectively found to be equal to ONE, ZERO and ONE, machine 300 generates a SEL control word that causes selector 230 to select the first input. This happens after the clearance of the ACCESS field in state 09 (what needed the selector 230 to be positioned to SEL=2) in order allow the normal transmission from register 250 to the ring. In any case, the internal B latch is reset to a logical ZERO. The process next proceeds to state 01.

Now it will be described with thorough details the general protocol that is used between the different adapters in order to share the same ring and exchange data. This description will be made in reference to figures 4, 5 and 6.

The general protocol basically begins with a first initialization procedure that consists of a Station Registration mechanism being effective at the beginning of the operating of the ring, at the installation of the stations. This is then followed by the general communication mechanism that allows the communication between two stations within the ring or a station with a router located within the ring in order to access a remote station.

The Station Registration mechanism starts as follows. Each station is fitted with a predetermined Station Identification (Station Id) number which is used for characterizing this station with respect to the others. After the power-on each station - station A for instance, tries to contact the Ring Server (defined by a particular Id number for instance). To achieve this, station A generates a control cell which comprises a particular value of VP (for instance the value zero may be reserved for distinguishing this communication with the ring server) as well as a token field which comprises a type field being set to 1 (control mode). The remaining bits are set in order to form a priority field which will be generally set to define a low priority level as the delay for this connection request is not critical. In the preferred embodiment of the invention this Registration control ATM cell conforms to the following general structure which follows: 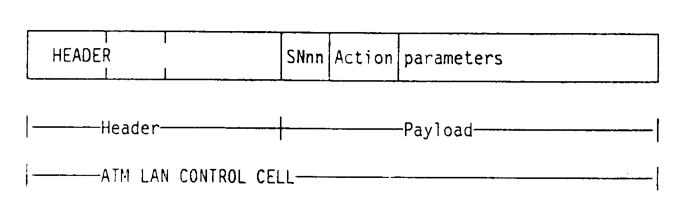 where the HEADER comprises the traditional fields, including VPI and VCI fields;
and the payload part of the ATM cell comprises the following field:
- SNnn is the sequence number byte
- Action is the type of command : Registration , Connection , deconnection , control , diagnostic , statistic ...
- parameters are all the parameters corresponding to the requested action like stations identification, protocols and functions used ....

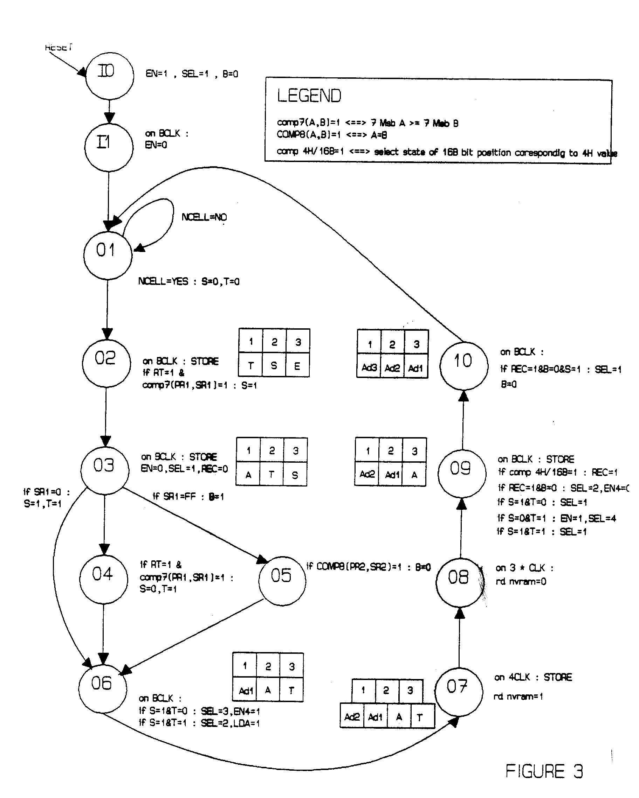

Since station A wishes to initiate the Registration procedure, the action field of the ATM control cell is set to define the registration procedure and the parameters define the station, e.g. the Id of the station. The generation of this Registration ATM cell is illustrated in figure 4 with reference to line 401. For the purpose of the explanation, it will be assumed that the Id number of station A is equal to 101. It should be noticed that this particular Registration cell will be sent as soon as a free frame, that is to say a frame which comes from the ring and which has an ACCESS field value being lower than that of the priority field that was defined before for generating the ATM Registration control cell, is detected by the adapter. Such a comparison between the values of the priority is performed in accordance to the mechanism that was described before with reference to figure 3, and particularly with the developments relating to state 04 of control machine 300.

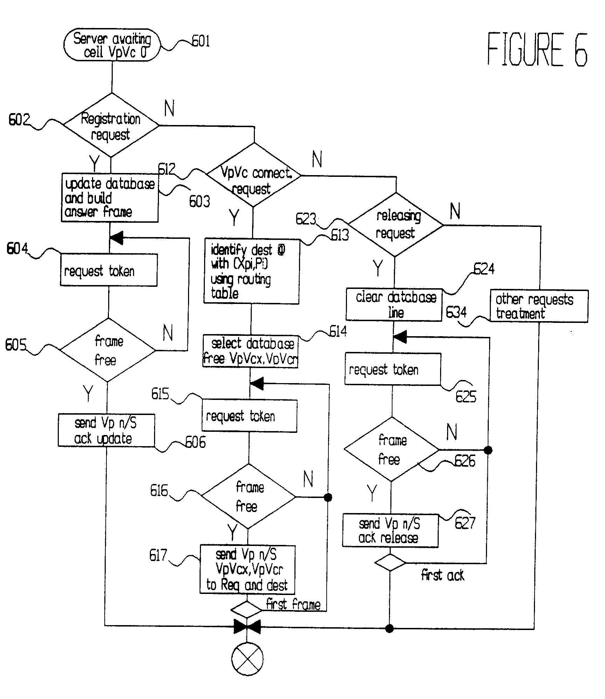

The processing of the frame transmitted by station A into the ring server complies with the general flow control that is illustrated in figure 6. When ring server receives this frame which VP field characterizes the ring server Id, in step 601, the ring server proceeds to step 602. This step is a test to determine whether the ACTION field in the ATM control cell defines a Registration action. In the case of a registration action, the process then proceeds to step 603 where the ring server updates its own data base in order to record the station Id of the newly installed station. The appropriate operations that are involved in such an update are well known from the skilled person and will not be further discussed. The process then proceeds to the construction of an acknowledgment ATM control cell which also complies to the above mentioned general structure. This second cell will be particularized by a VP field indicating the Id of station A that requested the registration, and one parameter set to a acknowledge bit. Then, step 604, the ring server requests the token by loading its own priority value into the 16-bit register of control machine 300. This loading process conforms to the description made with respect to states 02, 04 and 09 of figure 3. The process then proceeds to step 605 where the ring server wait for the occurrence of a free frame as previously recalled for the station A. As mentioned previously, the priority values that are used for managing and processing the Registration procedure are low since the procedure is not particularly critical. If the frame is free, the process proceeds to step 606 where the previously constructed ATM cell is embedded in a frame and transmitted to the ring. It should be noticed that in a particular embodiment of the invention, the ring server uses one mechanism that progressively increases the value of the priority which is used in the registration procedure as the time elapses in order to ensure that the frame is send within a determined period of time even if the traffic is particularly loaded. The transmission of the acknowledgment of the ring server, which was described before, is illustrated in figure 4 with reference to line 403.

When station A receives the above described acknowledge frame, it detects the occurrence of its own ID number inside the VP field and is therefore made aware that this frame is intended to be stored and processed. Such a determination is performed in accordance with the internal mechanisms that were described in reference to state 07 to 10 of figure 3. Such an information is transmitted to the upper layer of the general communication protocol. The procedures which can be initiated from this information, e.g. the flow control and error management, are handled at this upper layer and will therefore not be further described. In a preferred embodiment of the invention, assuming that station A has completed a full set of consecutive registration procedures which all failed, the upper layer of the communication protocol may use the broadcast mode that was described before in order to inform all the stations existing in the ring that a major failure did occur. The reception and processing of the registration ATM control cell completes the registration procedure.

Similarly, a second station B which has an identification number being equal to 102 may also initiate a Registration procedure which is illustrated in figure 4 with respect to line 402, to which the ring server also answers by a corresponding acknowledgment procedure which is represented in reference to line 404 of figure 4.

When all the Registration procedures that were mentioned before are completed, the general communication mechanism can be initiated. This mechanism allows the communication between two stations within the ring or a station with a router located within the ring in order to access a remote station. This mechanism generally comprises three distinctive procedures: a first one consisting of a Connection Request in order to assign a VP/VC to this communication; then followed by a second Data transfer; and, at last, the Disconnection procedure that releases the VP/VC.

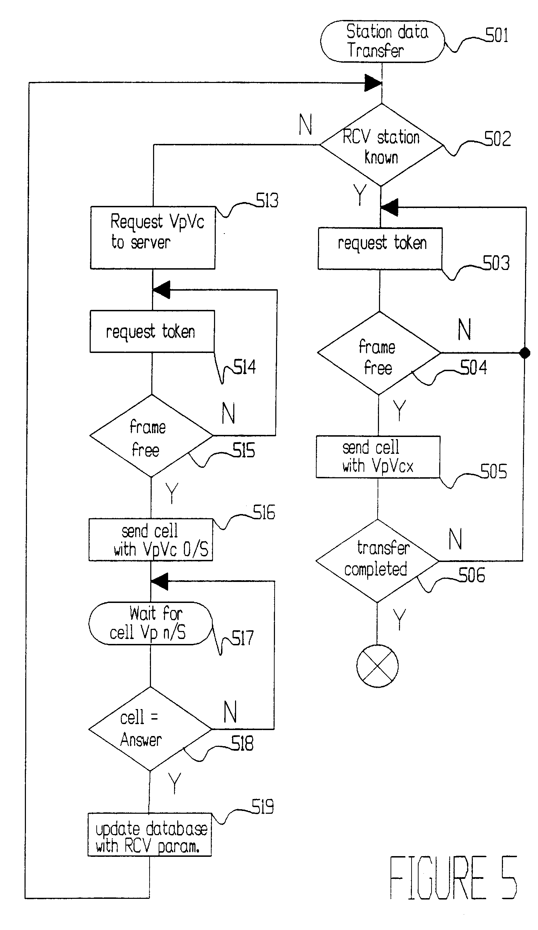

When a station A for instance wishes to transfer some data to a station B, the former requests the ring server to be assigned a VP/VC for this communication in accordance with the well known ATM procedures. This request is represented in figure 4 with reference to line 411 and is processed as represented in the flow diagram which is illustrated in figure 5. More particularly, this resquest is initiated in step 501. Then, a test is performed to check whether a VP/VC is already available for a data transfer between the two stations, step 502. If such a VP/VC is not available, then the process proceeds to step 513 where station A requests a VP/VC to the ring server. To achieve this, station A prepares the construction of a ATM control frame which is characterized by a VP/VC equal to the ring server Id (that is zero in the preferred embodiment) with an ACTION field defining the CONNECTION value and the following additional parameters Xpi and Pi. The latter is used by the station for determining the appropriate upper layer protocol which is used, e.g. IP or X.25. Xpi is defined as the Id within the protocol. For instance, assuming that the protocol which is used is IP (i=1), the Xpi value is defined as the IP address of the destination station, e.g. "9.100.25.102". Assuming that the X.25 protocol is used (i=2 for instance), the Xpi defines the address of the destination station. Then the process proceeds to step 514 where the station A requests the token by loading its own priority value into the 16-bit register of control machine 300. Then, in step 515 the station waits for the occurrence of a free frame, that is to say a frame which comes from the ring and which has an ACCESS field value being lower than that of the priority field that was defined before for generating the ATM Connection control cell. As was previously mentioned, such a comparison between the values of the priority is performed in accordance to the mechanism that was described before with reference to figure 3, and particularlywith the developments relating to state 04 of control machine 300. In step 516, the station A transmits the previously constructed Connection control cell to the ring when the free frame is detected. The station then proceeds to step 517 where it waits for the occurrence of a frame coming from the server and which Vp/Vc field defines its personal identification number.

With respect to figure 6 again, the ring server receives the cell transmitted by station A. As it detects in the Vp/Vc field the personal identification number of the server (for instance zero), the latter proceeds from step 601 to step 602 where it tests the contents of the ACTION field of the control cell. As this field does not contain the REGISTRATION parameter, the process proceeds to step 612 where an additional test is performed on the ACTION field to determine if the field contains a CONNECTION request. Since this is the case, the process goes to step 613 where the ring server extracts the parameters defining the two stations which will communicate, and identifies the corresponding Xpi and Pi parameters by means of its own routing tables in order to determine the physical personal identification number of the destination station. Then, step 614, the server chooses at least one value of Vp/Vc that will be assigned to the particular communication between station A and B. Generally speaking this assignment involves at least one value for the transmission from station A to B (Vp/Vcx) and a second one for the reverse direction (Vp/Vcr). The ring server then proceeds with the construction of two distinctive control cells. They both have an ACTION field which is defined as being the Connection Acknowledge and a set of parameters which defines the Vp/Vcx and Vp/Vcr. The first one will be sent to station A and will therefore have a Vp field set to the Id number of this station (101 in our example) while the second one will be sent to station B by using a Vp field which is set to the Id number of the latter station (102 in our example). The process then proceeds to step 615 where a token is requested by means of a loading of the own priority value into the 16-bit register of control machine 300 of ring server. The process then proceeds to step 616 where the server waits for the detection of a free cell, that is to say a frame which comes from the ring and which ACCESS field value is lower than that of the priority field loaded before. The process then proceeds to step 617 where the first frame is transmitted to station A. The process then reiterates the above steps 615, 616 and 617 in order to transmit the second frame which will be processed by station B. The communication of these two frames is respectively illustrated with reference to lines 412 and 413 of figure 4.

With respect to figure 5 again , station A processes the first CONNECTION Acknowledge frame in step 518 as follows. Station A checks the contents of the ACTION field and the additional parameters to determine whether this frame corresponds to the particular request it initiated before in step 513. As long as station A does not receive the expected frame, it proceeds again to step 517. On the contrary when the frame which is received is detected to be corresponding to the particular request (which is the case in our assumption), the process proceeds to step 519 where station A provides the appropriate parameters to the upper communication layers. The process then proceeds to step 502 of figure 5.

The station B which receives the second CONNECTION Acknowledge frame, is made aware that a station wish to communicate with it and extracts the appropriate parameters in order to transmit them to the upper layer of the communication protocol.

With respect to figure 5 again, in the case where a Vp/Vc value has just been assigned or appears to be still assigned because of a prior communication between the two stations resulting in a Vp/Vc values which are not yet released, the process goes to step 503. In step 503 station A can request the token by loading its own priority value into the 16-bit register of control machine 300. Then, step 504, station waits for a free frame, that is to say a frame which comes from the ring and which has an ACCESS field value being lower than that of the previously loaded priority field. On the occurrence of a such a free frame, the process proceeds to step 505 where the station can initiate the transfer of the first data cell using Vp/Vcx. The process then proceeds to step 506 where a test is performed in order to check if the full data transfer is completed or if additional cell are needed to be transmitted. In the first case, the communication session can be completed and the station A can proceeds to the releasing of the Vp/Vcx and Vp/Vcr which were provided by the ring server. This is achieved by the transmission of a specific control cell to the server which it will decode as a Release request in step 623 of figure 6. This will result in the clearance of the Vp/Vc into the data base of the ring server, step 624, so that this value becomes available for further communication requests. After the latter release, the ring server transmit a RELEASE ACKNOWLEDGE frame to the two stations A and B. This involves to request the token in step 625 in a similar way than that described before, followed by a test 626 to determine the existence of a frame being free. In such a case, the RELEASE ACKNOWLEDGE frame can be transmitted in step 627.

In the second case, station A proceeds further with the communication until the last data cell is transmitted. This is achieved by proceeding to step 503.

It should be noticed that the structure which was described permits each station to operate with two or more identifiers. This entails serious advantage. In particular, when the ring station (Id=0) happens to fail, another station can be assigned the Id identifier of the ring station so that the ring can continue to operate. This allows each station to virtually operate as a ring station.

It should be noticed that, since each adapters uses shift registers (190, 250), each frame can be entirely loaded into the shift registers when the number of stations increases. Indeed, a set of twenty stations provides the possibility to store and forward 60 bytes, that is to say one ATM cell. However, if the number of the networks is higher, one may envisage the possibility to load more than one ATM cell in the network what results in an increase of the throughput of the communication.

Also, assuming that an ATM cell is to be transported between two stations which are close one another, or even adjacent, it appears that the frame is accessed during a very short time since the first station accesses the frame (by setting the highest priority to the ACCESS field) which can, then, be rapidly released by the second station which receives the frame. Therefore the frame becomes available before it has performed a full turn inside the ring. This also entails an increase in the effective throughput of the ATM ring communication. This effectiveness still increases with the size of the ring.

Further, in a preferred embodiment of the invention, it should be noticed that each station may be fitted with two separate adapters, each one being dedicated to one direction. Therefore a double direction ring topology is provided which allows reliability and effectiveness. In particularly, by controlling the appropriate direction which should be used for transporting an ATM cell between two stations in response to the traffic existing in the other one, it becomes possible to greatly optimize the communication in the ring and the throughput.

At last, in another preferred embodiment of the invention, the frame structure comprises an additional field which is used for increasing the number of address bits which are dedicated for characterizing the VP/VC communication (which is already defined in the header of the ATM cell).

At last, it should be noticed that the invention may be embodied in a network which uses non ATM fixed cells (for instance having 64 bytes) as well as for variable length cells.

## Claims

1. Method for allowing communication of Asynchronous Transfer Mode (ATM) cells in a ring network that comprises at least a first station A (101), a second station B (102) and a third station (001) operating as a ring server; said method involving the processing by each of said station of the following frame structure:
- a Frame starting delimiter (START);
- a TOKEN field used by each station for requesting an access to the next frame which will be available in the ring, said TOKEN field including a first PRIORITY field being continuously updated by each station when the frame circulates with the ring, said updating consisting of the replacement of value carried by the PRIORITY field by its own PRIORITY value if the currently processing station detects the former being inferior to the latter;
- an ACCESS field including a first LEVEL field which is used by each station, in response to a comparison with the value carried by said PRIORITY field of said ACCESS field and the internal priority of the ATM cell which station wishes to transmit, for accessing the frame;
- a field designed to receive the contents of an ATM cell;
- an Frame ending delimiter (STOP);
whereby each of said station is allowed to get access to the frame in order to send an ATM cell and provide ring communication for ATM cells.

2. Method according to claim 1 characterized in that said frame structure further comprises an additional field for carrying additional bits characterizing the Virtual Path Identifier (VPI) and the Virtual Circuit Identifier (VCI) of the ATM cell.

3. Method according to claim 1 characterized in that each station wishing to access the frame for transmitting an ATM cell performs the steps of:
- detecting reception of said frame;
- upon reception of a frame, performing a comparison between the LEVEL value and its own priority value assigned to the ATM cell which is to be transmitted and,
- in response to said comparison, updating the contents of said LEVEL field with the highest priority value in order to get access to the frame;
- transmits the frame to the ring with its own ATM cell.

4. Method according to claim 3 characterized in that the station which accessed the frame releases it by means of the following steps:
- detecting the reception of the frame which was former transmitted in the ring by checking that a new frame is received from the ring;
- upon detection of the reception of the frame, clearing the ACCESS field in order to inform the next station in the ring to move the contents of the TOKEN field in the LEVEL field of the ACCESS field, whereby allowing the access of the frame to a new ATM cell.

5. Method according to claim 4 characterized in that each station which accessed the frame and which detects that the same frame comes back from the ring causes the ring to be released and informs the upper communication layer in the corresponding station that the access did failed.

6. Method according to claim 5 characterized in that said ring server causes a frame that has made a full turn within the ring to disappear by a clearance of the ACCESS field, causing the next station to move the contents of the TOKEN field in the LEVEL field of the ACCESS field.

7. Method according to claim 5 or 6 characterized in that after power-on each station initiates a REGISTRATION procedure involving the construction and transmission to said ring server of a frame including:
a TOKEN field having a first PRIORITY field set to define a low priority and a second field (T) set to define a control mode and;
an ATM cell having a header which has a VP field characterizing the ring server and a payload,
said payload including a SNnn field which defines the sequence number of the ATM cell and an ACTION field which is set to define a REGISTRATION procedure, and parameters for defining the station which requests registration by the ring server.

8. Method according to claim 7 characterized in that said REGISTRATION procedure involves the use of a timing process which, after occurrence of a predetermined period, progressively increases the value of the PRIORITY to be assigned to the PRIORITY field of the TOKEN field whereby assuring the completion of the registration procedure in a predetermined delay.

9. Method according to claim 8 characterized in that said ACCESS field comprises said first LEVEL field and a second field (B) which specifies broadcast communication where no station is allowed to cancel the frame excepted said ring server station or originating station.

10. Method according to claim 9 further involving the step of reaffecting the ring station identifier to a station in case of breakdown occurring in said ring station.

11. Station including means for carrying out the method claimed in anyone of claims 1 to 10.

12. Station including means for carrying out a double direction ring whereby the transport of one cell can be performed in one direction or the reverse direction.

13. Method according to anyone of claims 1 to 10 wherein the ATM cells are replaced by cells of bytes having a fixed value or variable length cells.
